# EUROPEAN PATENT SPECIFICATION

(11) **EP 0 449 354 B1**
(45) Date of publication and mention of the grant of the patent: **16.02.1994**
(21) Application number: 91200575.8
(22) Date of filing: 15.03.1991
(51) Int. Cl.: A23C 9/13

(54) **A process for preparing a calcium enriched fermented milk beverage**
Verfahren zur Herstellung eines mit Kalzium angereicherten Sauermilchgetränkes
Procédé de préparation d'une boisson à base de lait fermenté enrichie en calcium

(30) Priority: 16.03.1990 NL 9000613
(43) Date of publication of application: 02.10.1991
(73) Proprietor: FRIESLAND (FRICO DOMO) COÖPERATIE B.A., NL-8937 AC Leeuwarden (NL)
(72) Inventor: Siemensma, Andre, Leeuwarden (NL); van der Leij, Jan, NL-9045 RE Beetgumermolen (NL); Glas, Cornelis, NL-9255 KE Tietjerk (NL)
(74) Representative: Smulders, Theodorus A.H.J., Ir.

(56) References cited:
- EP-A- 0 138 690
- GB-A- 590 187
- GB-A- 2 015 863
- US-A- 4 784 871
- PATENT ABSTRACTS OF JAPAN, vol. 12, no. 202 (C-503)[3049], 10th June 1988; & JP-A-63 3768 (MEIJI SEIKA KAISHA) 08-01-1988
- J.L. RASIC et al.: "Yoghurt", 1978, pages 148-149,335-337,347-348, Technical Dairy Publishing House, Copenhagen, DK

## Description

The present invention relates to a process for preparing a fermented thin-liquid milk beverage, enriched with calcium, which for a longer period of time remains stable during storage (i.e. without substantial physicochemical changes occurring).

It is well known that milk products contribute substantially to the calcium supply of man. For specific target groups, namely consumers consuming only few dairy products or persons having an increased need for calcium (e.g. to prevent osteoporosis), there is a need for dairy products (foods) which are additionally enriched with calcium. Preferably, for physiological reasons, the Ca/P ratio relative to milk solids (normally 1.3 to 1.4 : 1) is increased therein, while it is a further objective to reduce the protein content in the product proportionally so as to obtain a maximum Ca retention in the body.

If the objective is to enlarge the Ca/P ratio relative to milk solids, it will be preferred to add Ca salts or mixtures thereof containing little or no phosphate, in the present case Ca salts or mixtures of Ca salts consisting substantially of, e.g., Ca gluconate, Ca citrate, Ca lactate, Ca ascorbate, Ca malate, Ca glycerophosphate, Ca caseinate, Ca(OH)2, CaCO3 or CaCl2.

These compounds, however, have the drawback that when they are added to acid fermented milk products, stability problems will soon occur.

Thus, for instance, attempts to prepare a fermented thin-liquid milk beverage enriched with additional calcium and showing a markedly increased Ca/P ratio relative to milk solids have not been successful up to this time.

With yogurt products having a thicker structure, this has been found possible only by adding the Ca salts after pasteurization of the final product. But this is of course not a good starting situation for an optimum bacteriological storage life, which is an objective, while there are also legal objections. See, e.g., the article entitled; "Fortification of low-fat-plain yogurt with calcium gluconate", Cultured Dairy Products Journal, February 1988, page 9.

This article shows that addition of Ca gluconate to yogurt (with a markedly increased Ca/P ratio relative to milk solids, namely more than 2.5) was successful only if the addition occurred after pasteurization, in contrast to, e.g., addition of Ca3(PO4)2, which salt could be added before pasteurization without difficulty.

The object of the present invention is to prepare a stable calcium enriched thin-liquid fermented milk beverage which can be pasteurized as final product without difficulty, while the Ca/P ratio relative to milk solids is markedly increased. It has been found that a stable beverage of this type can be prepared through the following combination of steps.
- Skimmed milk, partially defatted milk or skimmed milk enriched with butter oil or another fat is fermented at a solids content of at least 10% with a culture of lactic acid bacteria until a pH ranging from 3.8 and 4.2, optionally replacing part of the skim milk solids by whey solids.
- After fermentation the yogurt (having a high solids content) is homogenized (first homogenization).
- Then the yogurt is mixed with an aqueous solution of sugars, a stabilizer, a Ca compound, an Mg compound, citric acid and K or Na citrate. If required, microingredients may also added, such as vitamins, trace elements or aromatics, flavourings, colourings and/or sweeteners, or the enzyme glucose oxidase, if gluconate is to be generated from glucose.
- Finally, the mixture is vigorously homogenized at room temperature (second homogenization) and then packaged into the desired container and the contents are pasteurized in the container. Alternatively, the mixture is pasteurized when flowing through and aseptically packaged.

The resulting beverage is stable and proves to be surprisingly resistant to heating as applied to the final product according to well known pasteurization techniques. It can be properly stored in the refrigerator for several weeks, without substantial physicochemical changes occurring.

It is a further object of the present invention that optimum physiological ratios are always aimed at, in view of the utilization of calcium (Ca/P ratio >1.7, or a protein content of ≦20% in the solids of the product), while at an increased Ca/P ratio the Mg content is also adapted so as to permanently ensure a good Mg supply by means of a proper Mg/Ca ratio (optimum ratio 1:4 to 12). In this connection it is observed that, starting from the known contents of calcium, magnesium and phosphate in milk (-like) products, the amounts of the calcium and magnesium salts to be added can be determined by a simple calculation. The process steps described will hereinafter be discussed in more detail.

It has been found the the stability of the final beverage is substantially improved if the concentration of the solids is increased in the skimmed milk to be fermented. The normal content of non-fat milk solids in skimmed milk is about 8.5-9.0 wt.%.

The skimmed milk for fermentation for the beverage according to the invention should have a solids content of at least 10%. Preferably, a solids content of 15-30 wt.% is applied.

The increased solids content can be obtained by concentrating skimmed milk by means of evaporation or reverse osmosis, by adding skimmed milk powder to skimmed milk or by dissolving skimmed milk powder in water until the desired concentration.

Preferably, the skimmed milk should have been subjected to such a heat treatment as to denature the whey proteins completely or nearly completely. The same applies to the skimmed milk powder optionally used. Preferably, this should be of the so-called high-heat type.

Part of the skimmed milk solids can be replaced by whole milk solids, partially defatted milk solids, whey solids, butter oil or another fat, either of animal or of vegetable origin. The term "whey solids" as used herein means whey solids, desalted whey solids, whey protein concentrate-ds obtained through ultrafiltration, whey permeate-ds etc. Fermentation can be carried out in the manner conventional for yogurt manufacture. A suitable culture is the IST type from the NIZO (Netherlands Institute for Dairy Research). However, other cultures used for the manufacture of fermented milk products may also be used. Fermentation is carried out at a temperature ranging from 30 to 44°C. Optimum stability is obtained if fermentation is carried at about 36°C. The fermentation time will depend on the nature and concentration of the culture and on the fermentation temperature. Fermentation is continued until the pH has reached a value ranging from 3.8 to 4.2. At an inoculation percentage or 0.025-0.03% with the above culture, this pH will usually be reached at 36°C after 8 to 10 hours.

It is desirable during fermentation to gently agitate occasionally, e.g. once an hour or half an hour for 30 seconds. Too much agitation should be avoided since this will adversely affect the stability of the final beverage.

After reaching the desired pH, the yogurt is agitated until smoothness and homogenized. Homogenization can be carried out at the fermentation temperature, e.g. 36°C. The pressure applied is not very critical. Very suitable is a single homogenization at a pressure of 100 to 300 bar. After homogenization the yogurt is cooled to a temperature ranging from 15 to 25°C.

For the preparation of the aqueous solution the following constituents are dissolved in water: sugars, stabilizer, citric acid and/or salts thereof, Ca and Mg salt, optionally colourings, flavourings and sweeteners, aromatics or vitamins. The selection of the amounts of water and raw materials to be dissolved is such that after mixing the yogurt with the aqueous solution a concentrate of the desired composition is obtained. The composition of the aqueous solution will therefore depend on the desired final composition and on the solids content of the yogurt. The sugar used may be: saccharose or other sugars suitable for food use, such as glucose, lactose, fructose, hydrolyzed starch or mixtures of these sugars.

The stabilizer preferably used is pectin. Other vegetable gums may be used, such as CMC (carboxymethyl cellulose). The Ca salts may be salts of the type of Ca gluconate, Ca citrate, Ca lactate, Ca ascorbate, Ca malate, Ca glycerophosphate, Ca caseinate, Ca(OH)2, CaCO3, CaCl2 or Ca phosphate. These salts may be added alone or in combination.

Mg salts that may be used are, e.g., MgCl2, Mg(OH)2, Mg lactate etc.

The salts of citric acid used may be, e.g., Na or K citrate.

The colourings, flavourings and sweeteners that may be used are both natural and synthetic substances, provided they are suitable for human consumption and stable under the process and storage conditions used. The vitamins may be: vitamins A, B, C, D, E and K or folic acid. If required, food grade fibres may also be included.

For the preparation of the aqueous solution the sugars, pectin, Ca and Mg salts, citric acid and citrates are preferably first dry mixed and then dissolved in hot water (e.g. 70°C). In order to ensure a complete dissolution of particularly the pectin, a slight homogenization (40-80 bar) of the solution may be used. The resulting solution is cooled to 15-25°C.

The homogenized concentrated yogurt and the aqueous solution of the other ingredients are combined together and mixed intensely. If required, colourings and flavourings, aromatics, vitamins or trace elements may be added at this stage. The mixture is then subjected to a strong homogenization at room temperature. Preferably, homogenization is carried out twice at a pressure of 150-250 bar. More in particular, pressures between 180 and 220 bar have been found suitable for obtaining the desired stability in the final beverage.

The product is now ready for packaging into the desired container, after which the contents are pasteurized in the container. Alternatively, the product is pasteurized when flowing through and aseptically packaged.

The invention will now be illustrated by some examples.

### EXAMPLE I

138.7 kg "high heat" skimmed milk powder was dissolved in 828 g water of 60°C. The resulting solution was allowed to stand for 1 hour under slow agitation.
33 kg molten butter oil was then added, after which the mixture called "yogurt milk" was homogenized at 200 bar and 60-65°C. The "yogurt milk" was then subjected to a stand pasteurization of 15 minutes at 85°C. After cooling to 36°C the required amount of starter concentrate (0.3 kg IST) was added to the "yogurt milk", which was fermented for 12 hours at 36°C, until a pH of 4.1 was reached. During fermentation, slow agitation was effected every hour for 30 seconds. The thus prepared yogurt containing 16.5% solids was homogenized at 150 bar and then cooled to 20°C. 300 kg of the prepared yogurt containing 16.5% solids was mixed with 695 kg of an aqueous solution containing 50 kg saccharose, 24.5 kg lactose 1 aq, 4 kg pectin, 17.5 kg calcium gluconate, 1 kg magnesium chloride 6 aq, 2 kg citric acid 0 aq. The aqueous solution was prepared by dissolving in water of 70°C, under vigorous agitation, a dry premix consisting of the required amounts of saccharose, lactose 1 aq, pectin, Ca gluconate, magnesium chloride 6 aq and citric acid 0 aq, which was followed by 30 minutes agitation and cooling to 20°C. Under constant agitation the homogenized yogurt having a solids content of 16.5% was added to the premix solution of 20°C, followed by addition of 4 kg lemon flavouring and 1 kg vitamin mixture. After agitation for 30 minutes the mixture was homogenized twice at 20°C at 200 bar, then cooled and packaged. Subsequently, the product was pasteurized in the package (bottles) for 10 minutes at 71°C.
There was obtained a very stable product which even after 6 months storage showed no substantial separation or sedimentation in the liquid.
The final product contained 15.5% solids, a Ca/P ratio of 4.5:1, an Mg/Ca ratio of 1:11, a protein content of 10% in the solids and a pH of 4.0.

### EXAMPLE II

A product also having excellent physical stability was prepared by carrying out the process of Example I. However, the "yogurt milk" now consisted of 171.7 kg "high heat" skimmed milk powder, which was dissolved in 828 kg water of 60°C, followed by stand pasteurization. There was obtained a final product of the following composition: 15.5% solids, a Ca/P ratio of 4:1, an Mg/Ca ratio of 1:11, a protein content of 13% in the solids and a pH of 4.0.

### EXAMPLE III

The product according to Example I was prepared, but the aqueous premix liquid contained 50 kg saccharose, 23.5 kg lactose 1 aq, 4 kg pectin, 7 kg calcium gluconate, 3.5 kg Ca lactate, 5 kg Ca citrate, 3 kg MgCl2 6 aq, 2 kg citric acid 0 aq and 1 kg K citrate.
Again, a very stable final product was obtained. The composition of the final product was: 15.5% solids, a Ca/P ratio of 5:1, an Mg/Ca ratio of 1:6, a protein content of 10% in the solids and a pH of 4.0.

### EXAMPLE IV

There was prepared a product according to the process of Example II. However, the "yogurt milk" was composed of 72.5 kg "high heat" skimmed milk powder and 72.2 kg whey powder, which was dissolved in 885 kg water of 60°C. Again, an excellently stable product was obtained. The final product contained 14.5% solids, a Ca/P ratio of 5:1, an Mg/Ca ratio of 1:10, a protein content of 7.5% in the solids and a pH of 4.0.

## Claims

1. A process for preparing a calcium enriched fermented milk beverage, wherein skimmed milk having a solids content of at least 10% is fermented with a culture of lactic acid bacteria until a pH ranging from 3.8 to 4.2, the resulting fermented milk product is homogenized, mixed with an aqueous solution of sugars, a Ca salt, a Mg salt, a stabilizer, citric acid and/or salts of citric acid in such a ratio that the protein content in the solids ≦20%, the Ca/P ratio ≧1.7 and the Mg/Ca ratio is 1:4 to 1:12 and, finally, the mixture is vigorously homogenized at room temperature and then pasteurized.

2. A process according to claim 1, characterized in that the skimmed milk having a solids content of at least 10% is prepared by dissolving skimmed milk powder in water.

3. A process according to claim 2, characterized in that "high heat" skimmed milk powder is used.

4. A process according to claim 1, characterized in that the skimmed milk having a solids content of at least 10% is prepared by dissolving skimmed milk powder in skimmed milk.

5. A process according to claim 1, characterized in that the skimmed milk having a solids content of at least 10% is obtained by evaporating skimmed milk.

6. A process according to claims 1 through 5, characterized in that the skimmed milk having a solids content of at least 10% has a non-fat milk solids concentration of 10-35%.

7. A process according to claims 1 through 6, characterized in that the skimmed milk having a solids content of at least 10% has a non-fat milk solids concentration of 15-30%.

8. A process according to claims 1 through 7, characterized in that the skimmed milk solids are partly replaced by whole milk solids.

9. A process according to claims 1 through 7, characterized in that the skimmed milk solids are partly replaced by partially defatted milk solids.

10. A process according to claims 1 through 7, characterized in that the skimmed milk solids are partly replaced by butter oil or another fat.

11. A process according to any of the preceding claims, characterized in that the (milk) solids are partly replaced by whey solids.

12. A process according to any of the preceding claims, characterized in that the stabilizer used is pectin.

13. A process according to any of the preceding claims, characterized in that the stabilizer used is CMC.

14. A process according to any one of the preceding claims, characterized in that the product is enriched with a Ca salt or combination thereof of the type of Ca gluconate, Ca citrate, Ca lactate, Ca ascorbate, Ca malate, Ca glycerophosphate, Ca caseinate, Ca(OH)2, CaCO3, CaCl2, Ca phosphate.

15. A process according to any of the preceding claims, characterized in that the product obtained thereby is also enriched with a food grade acid of the type of malic acid, lactic acid, fumaric acid or tartaric acid.

16. A process according to any of the preceding claims whereby the protein content in the solids is less than 15%.

17. A process according to any of the preceding claims, characterized in that the Ca/P ratio is ≧ 2.5.

18. A process according to any of the preceding claims, characterized in that the product is also enriched with colourings, flavourings and/or sweeteners, aromatics or microcomponents, such as B vitamins, vitamin C, vitamin A, vitamin D, vitamin E, vitamin K or trace elements.

19. A process according to any of the preceding claims, characterized in that before the last homogenization or the final pasteurization gluconate is generated from glucose by means of glucose oxidase.

## Patentansprüche

1. Verfahren zur Herstellung eines Calcium-angereicherten Sauermilchgetränks, bei dem Magermilch mit einem Trockenmassegehalt von mindestens 10 % mit einer Milchsäurebakterienkultur bis zu einem pH im Bereich von 3,8 bis 4,2 fermentiert wird, das resultierende fermentierte Milchprodukt homogenisiert wird, mit einer wässrigen Lösung von Zuckern, einem Ca-Salz, einem Mg-Salz, einem Stabilisator, Zitronensäure und/oder Salzen der Zitronensäure in einem solchen Verhältnis gemischt wird, daß der Proteingehalt in der Trockenmasse ≦ 20 % ist, das Ca/P-Verhältnis ≧1,7 ist und das Mg/Ca-Verhältnis 1:4 bis 1:12 beträgt, und schließlich die Mischung kräftig bei Raumtemperatur homogenisiert und dann pasteurisiert wird.

2. Verfahren gemäß Anspruch 1, dadurch gekennzeichnet, daß die Magermilch mit einem Trockenmassegehalt von mindestens 10 % durch Auflösung von Magermilchpulver in Wasser hergestellt wird.

3. Verfahren gemäß Anspruch 2, dadurch gekennzeichnet, daß "high heat" (hocherhitztes) Magermilchpulver verwendet wird.

4. Verfahren gemäß Anspruch 1, dadurch gekennzeichnet, daß die Magermilch mit einem Trockenmassegehalt von mindestens 10 % durch Auflösung von Magermilchpulver in Magermilch hergestellt wird.

5. Verfahren gemäß Anspruch 1, dadurch gekennzeichnet, daß die Magermilch mit einem Trockenmassegehalt von mindestens 10 % durch Eindampfen von Magermilch erhalten wird.

6. Verfahren gemäß den Ansprüchen 1 bis 5, dadurch gekennzeichnet, daß die Magermilch mit einem Trockenmassegehalt von mindestens 10 % eine Nicht-Fett-Milchtrockenmasse-Konzentration von 10 bis 35 % hat.

7. Verfahren gemäß den Ansprüchen 1 bis 6, dadurch gekennzeichnet, daß die Magermilch mit einem Trockenmassegehalt von mindestens 10 % eine Nicht-Fett-Milchtrockenmasse-Konzentration von 15 bis 30 % hat.

8. Verfahren gemäß den Ansprüchen 1 bis 7, dadurch gekennzeichnet, daß die Magermilchtrockenmasse teilweise durch Vollmilchtrockenmasse ersetzt wird.

9. Verfahren gemäß den Ansprüchen 1 bis 7, dadurch gekennzeichnet, daß die Magermilchtrockenmasse teilweise durch teilentfettete Milchtrockenmasse ersetzt wird.

10. Verfahren gemäß den Ansprüchen 1 bis 7, dadurch gekennzeichnet, daß die Magermilchtrockenmasse teilweise durch Butteröl oder ein anderes Fett ersetzt wird.

11. Verfahren gemäß einem der vorhergehenden Ansprüche, dadurch gekennzeichnet, daß die (Milch)-Trockenmasse teilweise durch Molketrockenmasse ersetzt wird.

12. Verfahren gemäß einem der vorhergehenden Ansprüche, dadurch gekennzeichnet, daß der verwendete Stabilisator Pektin ist.

13. Verfahren gemäß einem der vorhergehenden Ansprüche, dadurch gekennzeichnet, daß der verwendete Stabilisator CMC ist.

14. Verfahren gemäß einem der vorhergehenden Ansprüche, dadurch gekennzeichnet, daß das Produkt mit einem Ca-Salz oder einer Kombination davon vom Typ des Ca-Gluconats, Ca-Citrats, Ca-Lactats, Ca-Ascorbats, Ca-Malats, Ca-Glycerophosphats, Ca-Caseinats, Ca(OH)₂, CaCO₃, CaCl₂, oder Ca-Phosphats angereichert wird.

15. Verfahren gemäß einem der vorhergehenden Ansprüche, dadurch gekennzeichnet, daß das dadurch erhaltene Produkt auch mit einer lebensmittelgeeigneten Säure vom Typ der Äpfelsäure, Milchsäure, Fumarsäure oder Weinsäure angereichert wird.

16. Verfahren gemäß einem der vorhergehenden Ansprüche, bei dem der Proteingehalt in der Trockenmasse weniger als 15 % beträgt.

17. Verfahren gemäß einem der vorhergehenden Ansprüche, dadurch gekennzeichnet, daß das Ca/P-Verhältnis ≧ 2,5 ist.

18. Verfahren gemäß einem der vorhergehenden Ansprüche, dadurch gekennzeichnet, daß das Produkt auch mit Farbstoffen, Geschmacksstoffen und/oder Süßstoffen, Aromastoffen oder Mikrobestandteilen wie B-Vitaminen, Vitamin C, Vitamin A, Vitamin D, Vitamin E, Vitamin K oder Spurenelementen angereichert wird.

19. Verfahren gemäß einem der vorhergehenden Ansprüche, dadurch gekennzeichnet, daß vor der letzten Homogenisierung oder der abschließenden Pasteurisierung Gluconat aus Glucose mittels Glucoseoxidase erzeugt wird.

## Revendications

1. Procédé pour la préparation d'une boisson de lait fermenté enrichi en calcium dans lequel du lait écrémé contenant au moins 10% de substances solides est fermenté en présence d'une culture de bactéries productrices d'acide lactique jusqu'à un pH situé dans la plage 3,8 à 4,2, le produit à base de lait fermenté résultant est homogénéisé puis mélangé avec une solution aqueuse de sucres, d'un sel de calcium, d'un sel de magnésium, d'un stabilisant, d'acide citrique et/ou des sels de l'acide citrique dans une proportion telle que la teneur en proteines des substances solides soit ≦ 20%, le rapport Ca/p soit ≧ 1,7 et le rapport Mg/Ca soit de 1:4 à 1:12 et, le mélange est finalement homogénéisé vigoureusernent à température ambiante et puis pasteurisé.

2. Procéde selon la revendication 1, caractérisé en ce que le lait écrémé contenant au moins 10% de substances solides est prépare en solubilisant une poudre de lait écrémé dans l'eau.

3. Procédé selon la revendication 2, caractérisé en ce que l'on utilise une poudre de lait écrémé "haute température".

4. Procédé selon la revendication 1, caractérisé en ce que le lait écrémé contenant au moins 10% de substances solides est préparé en solubilisant une poudre de lait écrémé dans du lait écrémé.

5. Procédé selon la revendication 1, caractérisé en ce que le lait écrémé contenant au moins 10% de substances solides est obtenu en évaporant du lait écrémé.

6. Procédé selon l'une quelconque des revendications 15, caractérisé en ce que le lait écrémé contenant au moins 10% de substances solides a une concentration en substances solides du lait, non grasses, de 10 à 35%.

7. Procédé selon l'une quelconque des revendications 1 à 6, caractérisé en ce que le lait écrémé contenant au moins 10% de substances solides a une concentration en substances solides du lait, non grasses, de 15 à 30%.

8. Procédé selon l'une quelconque des revendications 1 à 7, caractérisé en ce que les substances solides du lait écrémé sont remplacées par des substances solides de lait entier.

9. Procédé selon l'une quelconque des revendications 1 à 7, caractérisé en ce que les substances solides du lait écrémé sont en partie remplacées par des substances solides de lait partiellement dégraissé.

10. Procédé selon l'une quelconque des revendications 1 à 7, caractérisé en ce que les substances solides du lait écrémé sont en partie remplacées par de la graisse de beurre ou tout autre graisse.

11. Procédé selon l'une quelconque des revendications précédentes, caractérisé en ce que les substances solides du lait sont en partie remplacées par des substances solides de petit lait.

12. Procédé selon l'une quelconque des revendications précédentes, caractérisé en ce que le stabilisant utilisé est la pectine.

13. Procéde selon l'une quelconque des revendications précédentes, caractérisé en ce que le stabilisant utilisé est le CMC.

14. Procédé selon l'une quelconque des revendications précédentes, caractérisé en ce que le produit est enrichi avec un sel de calcium ou une combinaison de celui-ci du type gluconate de calcium, citrate de calcium, lactate de calcium, ascorbate de calcium, malate de calcium, glycérophosphate de calcium, caséinate de calcium, CaOH₂, CaCO₃, CaCl₂ ou phosphate de calcium.

15. Procédé selon l'une quelconque des revendications précédentes, caractérisé en ce que le produit est également enrichi avec un acide acceptable dans l'alimentation du type de l'acide malique, l'acide lactique, l'acide fumarique ou l'acide tartrique.

16. Procédé selon l'une quelconque des revendications précédentes, dans lequel la teneur en protéines dans les substances solides est inférieure à 15%.

17. Procédé selon l'une quelconque des revendications précédentes, caractérisé en ce que le rapport Ca/p est supérieur ou égal à 2,5.

18. Procédé selon l'une quelconque des revendications précedentes, caractérisé en ce que le produit est également enrichi avec des colorants, des arômes et/ou des édulcorants, des aromatiques ou des microcomposés tels que les vitamines B, la vitamine C, la vitamine D, la vitamine E, la vitamine K ou des éléments l'état de traces.

19. Procédé selon l'une quelconque des revendications précédentes, caractérisé en ce que avant l'homogénéisation finale ou la pasteurisation finale du gluconate est génére à partir du glucose au moyen de la glucose oxydase.
